# EUROPEAN PATENT APPLICATION

(11) **EP 3 339 665 A1**
(43) Date of publication of application: **27.06.2018**
(21) Application number: 17206627.6
(22) Date of filing: 12.12.2017
(51) Int. Cl.: F16B 39/30

(54) **MALE THREADED FASTENER**

(30) Priority: 22.12.2016 TW 105142743
(71) Applicant: Fwu Kuang Enterprises Co., Ltd., 717 Tainan City (TW)
(72) Inventor: CHANG, Chih-Feng, 701 Tainan City (TW)
(74) Representative: Stöckeler, Ferdinand

(57) **Abstract**

A male threaded fastener (2) for a female threaded fastener (6) has a shank (3) and a male thread (4) having a proximate standard thread portion (41) and a non-standard thread portion (42). The proximate standard thread portion (41) has a plurality of standard male thread turns (411) which define a standard pitch (P1). A distal one of the standard male thread turns (411) and a most proximate non-standard thread turn (421) of the non-standard thread portion (42) define a first pitch (P2) different from the standard pitch (P1).

## Description

The disclosure relates to a male threaded fastener, more particularly to a male threaded fastener which is less likely to loosen from a female threaded fastener.

A conventional male threaded fastener is likely to loosen from a female threaded fastener due to vibration.

To solve such problem, a conventional threaded fastener was proposed in US patent no. 7326014. The conventional threaded fastener includes a curved-line path thread provided in a helical pattern along a shank of the fastener. The curved-line path can be provided on either side of the standard straight-line path or on opposite sides of the straight-line path. The curved-line path can be provided on all or a portion of the thread from near the tip end thereof to near the head end thereof.

An object of the disclosure is to provide a novel male threaded fastener which is less likely to loosen from a female threaded fastener, and which has a relatively simple structure compared with the conventional threaded fastener disclosed in US patent no. 7326014.

According to the disclosure, a male threaded fastener is used for a female threaded fastener having a female thread which has a plurality of standard female thread turns extending along a screw axis. Each of the standard female thread turns has a pressure flank surface and a trailing flank surface. The male threaded fastener includes a shank and a male thread. The shank extends along the screw axis to terminate at a head end and a tail end. The male thread is formed on the shank and has a proximate standard thread portion and a non-standard thread portion. The proximate standard thread portion is disposed adjacent to the head end, and has a plurality of standard male thread turns which extends along the screw axis and which define a standard pitch between two adjacent ones of the standard male thread turns. A distal one of the standard male thread turns has a distal standard pressure flank and a distal standard trailing flank. The non-standard thread portion is configured to be thread-engageable with the female thread, and has a most proximate non-standard thread turn which is next to said distal one of the standard male thread turns, and which has a most proximate non-standard pressure flank and a most proximate non-standard trailing flank. The most proximate non-standard thread turn and said distal one of the standard male thread turns cooperatively define a first pitch which is different from the standard pitch such that when the male thread is in fully threaded engagement with the female thread, the most proximate non-standard pressure flank and the distal standard trailing flank are brought into full contact with the pressure flank surface and the trailing flank surface of a corresponding one of the standard female thread turns, respectively.

Other features and advantages of the disclosure will become apparent in the following detailed description of the embodiment with reference to the accompanying drawings, in which:
Fig. 1 is a schematic view of a male threaded fastener according to an embodiment of the disclosure;
Fig. 2 is an enlarged partial cross-sectional view of the male threaded fastener; and
Fig. 3 is an enlarged partial cross-sectional view of the male threaded fastener when a male thread of the male threaded fastener is fully threaded engagement with a female thread of a female threaded fastener.

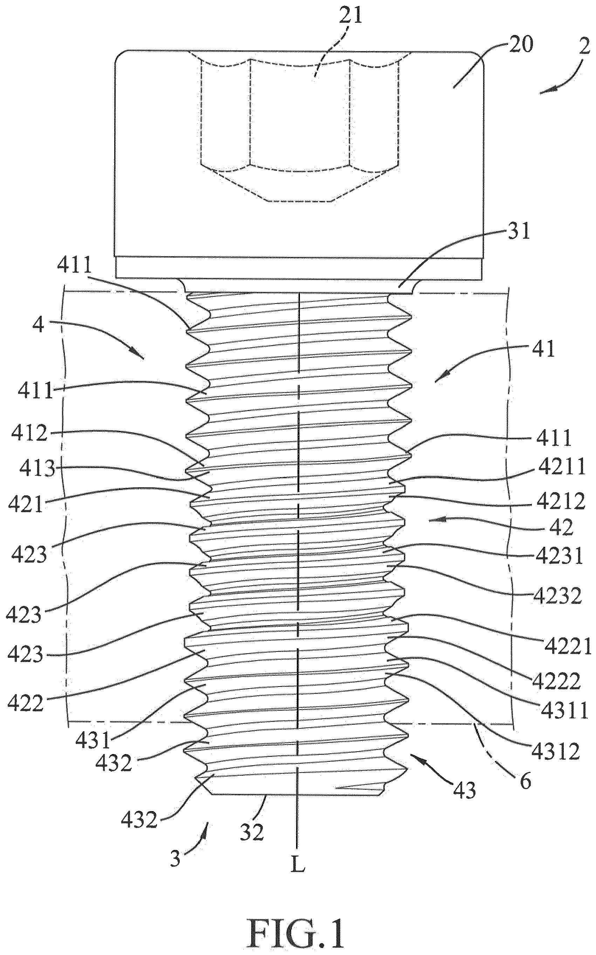

As shown in Figs. 1 to 3, a male threaded fastener 2 according to an embodiment of the disclosure can be in threaded engagement with a female threaded fastener 6. The female threaded fastener 6 has a female thread 7 which has a plurality of standard female thread turns 71 extending along a screw axis (L) . Each of the standard female thread turns 71 has a pressure flank surface 711 and a trailing flank surface 712. In this embodiment, the female threaded fastener 6 is a nut.

The male threaded fastener 2 includes a head 20, a shank 3, and a male thread 4.

The shank 3 extends along the screw axis (L) to terminate at a head end 31 and a tail end 32.

The head 20 is provided at the head end 31. The head 20 may have a slot 21 configured for engagement by a screw driver. Alternatively, the head 20 may have an outer periphery configured for engagement by a wrench.

The male thread 4 is formed on the shank 3 and has a proximate standard thread portion 41 and a non-standard thread portion 42.

The proximate standard thread portion 41 is configured to be thread-engageable with the female thread 7, and is disposed adjacent to the head end 31. The proximate standard thread portion 41 has a plurality of standard male thread turns 411 which extends along the screw axis (L) and which define a standard pitch (P1) between two adjacent ones of the standard male thread turns 411. The distal one of the standard male thread turns 411 has a distal standard pressure flank 412 and a distal standard trailing flank 413.

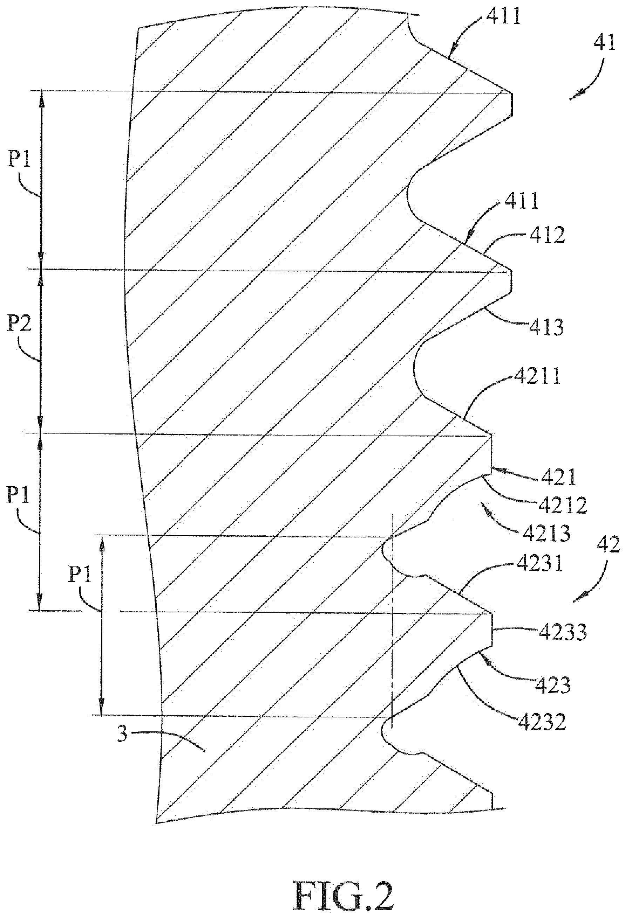

The non-standard thread portion 42 is configured to be thread-engageable with the female thread 7, and has a most proximate non-standard thread turn 421 which is next to said distal one of the standard male thread turns 411, and which has a most proximate non-standard pressure flank 4211 and a most proximate non-standard trailing flank 4212. The most proximate non-standard thread turn 421 and said distal one of the standard male thread turns 411 cooperatively define a first pitch (P2) which is different from the standard pitch (P1) (see Fig. 2). When the male thread 4 is in fully threaded engagement with the female thread 7, the most proximate non-standard pressure flank 4211 and the distal standard trailing flank 413 are brought into full contact with the pressure flank surface 711 and the trailing flank surface 712 of a corresponding one of the standard female thread turns 71, respectively. As such, the male threaded fastener 2 is less likely to loosen from the female threaded fastener 6, either due to vibration or after a long-time use.

In this embodiment, the most proximate non-standard trailing flank 4212 has a curved cutout region 4213 so as to minimize a contact area with the trailing flank surface 712 of a corresponding one of the standard female thread turns 71 to thereby facilitate the non-standard thread portion 42 to be threaded into the female thread 7.

Furthermore, the non-standard thread portion 42 further has a most distal non-standard thread turn 422 having a most distal non-standard pressure flank 4221 and a most distal non-standard trailing flank 4222.

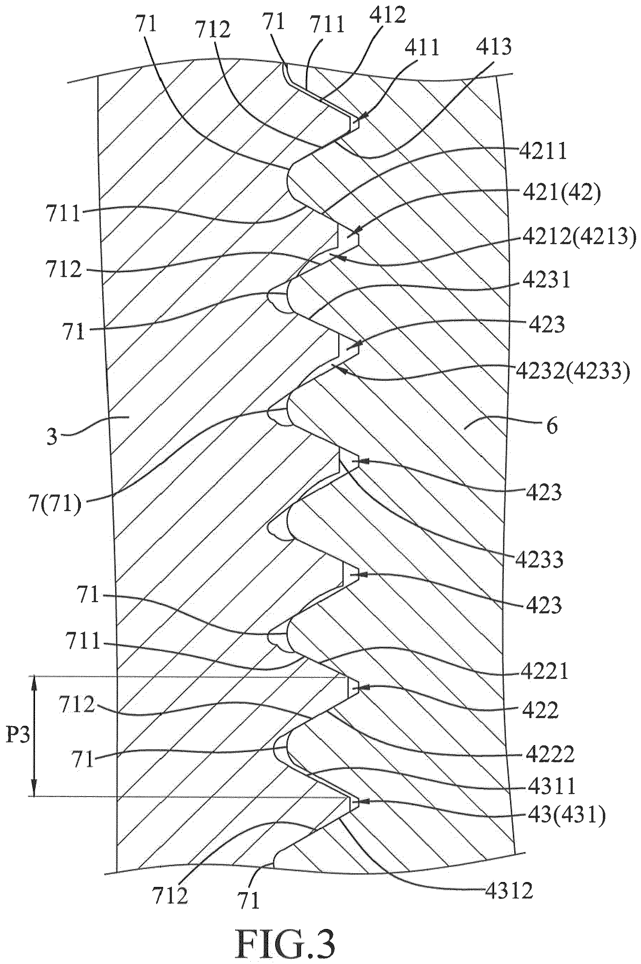

Moreover, the male thread 4 further has a distal standard thread portion 43 relative to the head end 31. The distal standard thread portion 43 has a proximate standard male thread turn 431 which is next to the most distal non-standard thread turn 422, and which has a proximate standard pressure flank 4311 and a proximate standard trailing flank 4312. The proximate standard male thread turn 431 and the most distal non-standard thread turn 422 cooperatively define a second pitch (P3) which is different from the standard pitch (P1) (see Figs. 2 and 3). When the male thread 4 is in fully threaded engagement with the female thread 7, the most distal non-standard pressure flank 4221 and the proximate standard trailing flank 4312 are brought into full contact with a mating pressure flank surface 711 and a mating trailing flank surface 712 of two corresponding ones of the standard female thread turns 71, respectively. In this embodiment, the second pitch (P3) is smaller than the first pitch (P2).

Furthermore, as shown in Fig. 3, when the male thread 4 is in fully threaded engagement with the female thread 7, the most distal non-standard trailing flank 4222 is also brought into full contact with the trailing flank surface 712 of a corresponding one of the standard female thread turns 71.

As shown in Fig. 1, in this embodiment, the distal standard thread portion 43 has remainder ones of standard male thread turn 432.

Furthermore, as shown in Figs. 1 and 3, the non-standard thread portion 42 has remainder ones of non-standard thread turns 423 between the most proximate and most distal non-standard thread turns 421, 422. Each of the remainder ones 423 has a non-standard pressure flank 4231, a non-standard trailing flank 4232, and a truncated crest region 4233.

The non-standard pressure flank 4231 is configured to be brought into full contact with the pressure flank surface 711 of a corresponding one of the standard female thread turns 71 when the male thread 4 is in fully threaded engagement with the female thread 7.

The non-standard trailing flank 4232 has a curved cutout region 4233 so as to minimize a contact area with the trailing flank surface 712 of a corresponding one of the standard female thread turns 71 to thereby facilitate the non-standard thread portion 42 to be threaded into the female thread 7.

The truncated crest region 4233 is disposed between the non-standard pressure flank (4231) and the non-standard trailing flank 4232 to facilitate the non-standard thread portion 42 to be threaded into the female thread 7.

In this embodiment, in comparison with the standard pressure flanks 412 and 4311, the non-standard pressure flanks 4211, 4221, and 4231 are all slightly shifted toward the head end 31. Besides, the non-standard thread turns 421, 422, 423 define the standard pitch (P1) between two adjacent ones of the non-standard thread turns 421, 422, 423 (see Fig. 2). The number of the non-standard thread turns may be varied based on requirement.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A male threaded fastener (2) for a female threaded fastener (6) having a female thread (7) which has a plurality of standard female thread turns (71) extending along a screw axis (L), each of the standard female thread turns (71) having a pressure flank surface (711) and a trailing flank surface (712), **characterized by**:
a shank (3) extending along the screw axis (L) to terminate at a head end (31) and a tail end (32); and
a male thread (4) formed on said shank (3) and having
a proximate standard thread portion (41) disposed adjacent to said head end (31), and having a plurality of standard male thread turns (411) which extends along the screw axis (L) and which define a standard pitch (P1) between two adjacent ones of said standard male thread turns (411), a distal one of said standard male thread turns (411) having a distal standard pressure flank (412) and a distal standard trailing flank (413), and
a non-standard thread portion (42) configured to be thread-engageable with the female thread (7), and having a most proximate non-standard thread turn (421) which is next to said distal one of said standard male thread turns (411), and which has a most proximate non-standard pressure flank (4211) and a most proximate non-standard trailing flank (4212) , said most proximate non-standard thread turn (421) and said distal one of said standard male thread turns (411) cooperatively defining a first pitch (P2) which is different from said standard pitch (P1) such that when said male thread (4) is in fully threaded engagement with the female thread (7), said most proximate non-standard pressure flank (4211) and said distal standard trailing flank (413) are brought into full contact with the pressure flank surface (711) and the trailing flank surface (712) of a corresponding one of the standard female thread turns (71), respectively.

2. The male threaded fastener according to Claim 1, **characterized in that** said most proximate non-standard trailing flank (4212) has a curved cutout region (4213) so as to minimize a contact area with the trailing flank surface (712) of a corresponding one of the standard female thread turns (71) to thereby facilitate said non-standard thread portion (42) to be threaded into the female thread (7).

3. The male threaded fastener according to Claim 1, **characterized in that**:
said non-standard thread portion (42) has a most distal non-standard thread turn (422) having a most distal non-standard pressure flank (4221) and a most distal non-standard trailing flank (4222); and
said male thread (4) further has a distal standard thread portion (43) relative to said head end (31), said distal standard thread portion (43) having a proximate standard male thread turn (431) which is next to said most distal non-standard thread turn (422), and which has a proximate standard pressure flank (4311) and a proximate standard trailing flank (4312), said proximate standard male thread turn (431) and said most distal non-standard thread turn (422) cooperatively defining a second pitch (P3) which is different from said standard pitch (P1) such that when said male thread (4) is in fully threaded engagement with the female thread (7), said most distal non-standard pressure flank (4221) and said proximate standard trailing flank (4312) are brought into full contact with a mating pressure flank surface (711) and a mating trailing flank surface (712) of two corresponding ones of the standard female thread turns (71), respectively.

4. The male threaded fastener according to Claim 3, **characterized in that** said non-standard thread portion (42) has remainder ones of non-standard thread turns (423) between said most proximate and most distal non-standard thread turns (421, 422), each of said remainder ones of said non-standard thread turns (423) having
a non-standard pressure flank (4231) configured to be brought into full contact with the pressure flank surface (711) of a corresponding one of the standard female thread turns (71) when said male thread (4) is in fully threaded engagement with the female thread (7), and
a non-standard trailing flank (4232) having a curved cutout region (4233) so as to minimize a contact area with the trailing flank surface (712) of a corresponding one of the standard female thread turns (71) to thereby facilitate said non-standard thread portion (42) to be threaded into the female thread (7).

5. The male threaded fastener according to Claim 4, **characterized in that** each of said remainder ones of said non-standard thread turns (423) further has a truncated crest region (4233) which is disposed between said non-standard pressure flank (4231) and said non-standard trailing flank (4232) to facilitate said non-standard thread portion (42) to be threaded into the female thread (7).
